**Europäisches Patentamt**

**European Patent Office**

**Office européen des brevets**

(19)

(11) Numéro de publication: **0 291 425**
**A1**

# (12) DEMANDE DE BREVET EUROPEEN

(21) Numéro de dépôt: **88420150.0**

(22) Date de dépôt: **06.05.88**

(51) Int. Cl.⁴: **B 03 B 9/06**
**C 12 M 1/00**

(30) Priorité: **07.05.87 FR 8706881**

(43) Date de publication de la demande:
**17.11.88 Bulletin 88/46**

(84) Etats contractants désignés:
**AT BE CH DE ES GB GR IT LI LU NL SE**

(71) Demandeur: **Jullien, Antonin**
**1, rue Henri Gorjus**
**F-69004 Lyon (FR)**

**Morel, Pierre**
**57, avenue Sainte Marie**
**F-94160 Saint Mande (FR)**

**Jullien, Yasmine**
**1, rue Henri Gorjus**
**F-69004 Lyon (FR)**

**Chevalier épouse Jullien, Claudette**
**1, rue Henri Gorjus**
**F-69004 Lyon (FR)**

(72) Inventeur: **Jullien, Antonin**
**1, rue Henri Gorjus**
**F-69004 Lyon (FR)**

**Morel, Pierre**
**57, avenue Sainte Marie**
**F-94160 Saint Mande (FR)**

**Jullien, Yasmine**
**1, rue Henri Gorjus**
**F-69004 Lyon (FR)**

**Chevalier épouse Jullien, Claudette**
**1, rue Henri Gorjus**
**F-69004 Lyon (FR)**

(74) Mandataire: **Maureau, Philippe**
**Cabinet Germain & Maureau Le Britannia - Tour C 20, bld**
**Eugène Déruelle Boîte Postale 3011**
**F-69392 Lyon Cédex 03 (FR)**

(54) **Procédé de traitement hydromécanique de déchets organiques pour la préparation de boues fermentescibles et dispositif pour sa mise en oeuvre.**

(57) Ce procédé consiste à réaliser éventuellement, de façon connue en soi, à l'aide d'un tambour magnétique (40), la séparation des particules de métaux ferreux pouvant être contenues à l'intérieur de la matière traitée, à réaliser dans un déchiqueteur (14), le déchiquetage des matières organiques et des matières inertes, à amener celles-ci dans une cuve (42) à l'intérieur de laquelle elles subissent une agitation en milieu aqueux, à séparer des boues les éventuelles matières flottantes et lourdes qu'elles peuvent contenir, et à ajouter à ces boues des boues en provenance de station d'épuration.
Application au traitement de déchets organiques.

FIG.2

EP 0 291 425 A1

**Description**

## PROCEDE DE TRAITEMENT HYDRO-MECANIQUE DE DECHETS ORGANIQUES POUR LA PREPARATION DE BOUES FERMENTESCIBLES ET DISPOSITIF POUR SA MISE EN OEUVRE

La présente invention a pour objet un procédé de traitement hydro-mécanique de déchets organiques pour la prépration de boues fermentescibles et un dispositif pour sa mise en oeuvre.

Ce procédé vise à assurer le traitement de déchets organiques, tels que des déchets urbains et notamment des ordures ménagères, des déchets agricoles, des déchets forestiers, des déjections animales, des algues d'eau douce et des algues marines pour l'obtention de boues destinées à être traitées ultérieurement par fermentation pour fournir du méthane.

Le procédé selon l'invention consiste à réaliser éventuellement, de façon connue en soi, à l'aide d'un tambour magnétique, la séparation des particules de métaux ferreux pouvant être contenues à l'intérieur de la matière traitée, à réaliser le déchiquetage des matières organiques et des matières inertes, à amener celles-ci dans une cuve à l'intérieur de laquelle elles subissent une agitation en milieu aqueux, à séparer des boues les éventuelles matières flottantes et lourdes qu'elles peuvent contenir, et à ajouter à ces boues des boues en provenance de station d'épuration.

Selon un premier mode de mise en oeuvre, dans le cas où les déchets sont constitués par des algues marines, ce procédé consiste à déchiqueter les algues, puis à mélanger les algues humides maid essorées avec de l'eau douce, dans des proportions volumiques sensiblement égales pour les algues et l'eau douce, à agiter fortement le mélange, à réaliser une déshydratation mécanique de celui-ci, à mélanger les algues ainsi obtenues avec un volume d'eau douce égal ou volume d'eau précédemment évacué, à agiter fortement le mélange, à en réaliser une nouvelle déshydratation mécanique puis à remplacer la dernière fraction d'eau évacuée par déshydratation, par des boues de rejet d'une station d'épuration.

En fin de traitement, ce procédé consiste à mélanger environ 30 % en volume d'algues avec 70 % de boues de station d'épuration.

Selon un autre mode de mise en oeuvre et dans la mesure où les matières organiques à traiter sont constituées par des déchets urbains, agricoles, forestiers ou des déjections animales, ce procédé consiste à introduire dans une cuve les matières organiques ayant préalablement subi, si besoin est, une séparation des particules métalliques, et une opération de déchiquetage, les matières organiques étant mélangées dans la cuve à des boues provenant d'une station d'épuration et à de l'eau pour obtenir une concentration en matière sèche de l'ordre de 50 g/l, ce mélange étant réalisé sous agitation énergique, à procéder ensuite à une agitation lente, afin de permettre aux matières légères de remonter en surface et aux matières lourdes de tomber au fond de la cuve, à évacuer la couche supérieure du mélange contenu dans la cuve pour récupérer les matières légères et recycler l'effluent liquide, à agiter fortement les boues, afin de permettre aux particules de matières organiques et minérales de se désagréger puis, après avoir réduit la vitesse d'agitation, à réaliser l'évacuation des boues au niveau du fond de la cuve, dans lequel est ménagé un caisson de récupération des matières lourdes, les boues contenues dans ce caisson étant évacuées avant de vider celui-ci des matières lourdes qu'il contient.

De toute façon, l'invention sera bien comprise à l'aide de la description qui suit, en référence au dessin schématique annexé représentant, à titre d'exemples non limitatifs, deux formes d'exécution d'un dispositif pour la mise en oeuvre de ce procédé :

Figure 1 est une vue en coupe d'un dispositif plus spécialement adapté à la préparation des algues marines ;

Figure 2 est une vue en coupe d'un dispositif plus spécialement adapté au traitement de matières organiques telles que déchets urbains, agricoles, forestiers ou déjections animales ;

Figure 3 est une vue en coupe et à échelle agrandie de la partie aval du dispositif de figure 2.

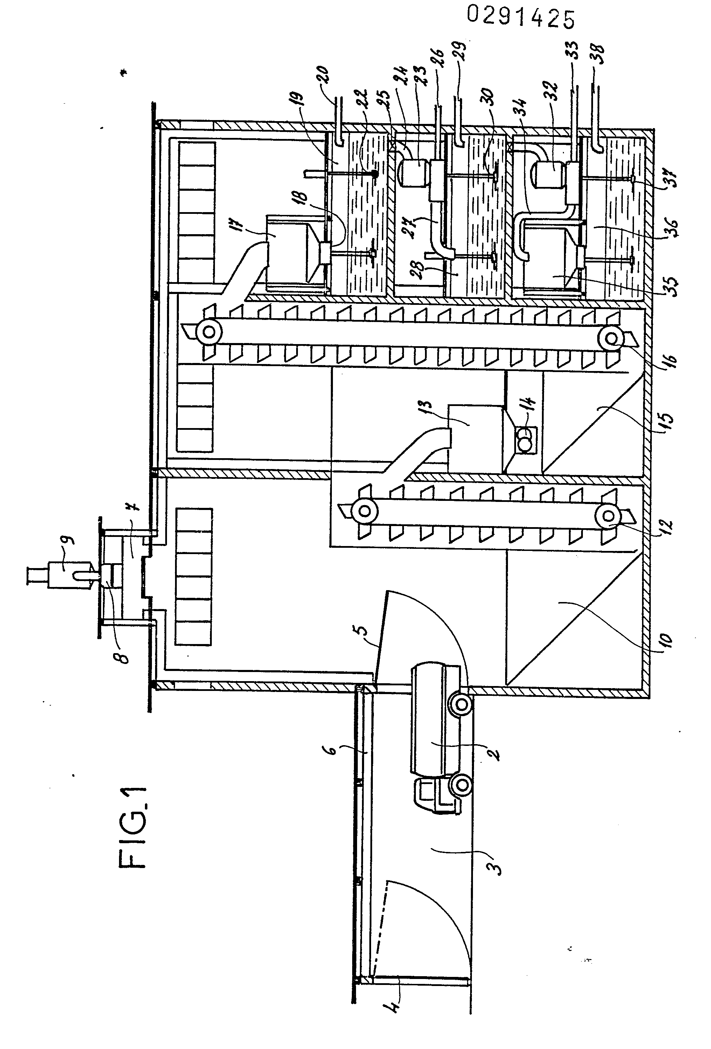

Comme montré à la figure 1, les algues marines égouttées sont amenées au centre de traitement à l'aide de véhicules, tels que celui portant la référence **2** qui pénètre dans un sas **3**. Ce sas est obturé par deux protes **4** et **5**, le mettant en communication, respectivement, avec l'extérieur et avec l'intérieur du centre de traitement.

Le sas est équipé d'une colonne d'aspiration **6** débouchant dans un dispositif de ventilation général de l'installation comprenant un sas d'aération **7**, un aspirateur **8** et une colonne **9** de traitement de l'air vicié. Lorsque la porte **5** est ouverte, le véhicule peut déverser les algues dans une fosse de stockage **10** en forme de trémie. Les algues sont reprises dans cette fosse de stockage par un élévateur à godets **12** les déversant dans une trémie **13** située au-dessus d'un déchiqueteur **14**. En dessous du déchiqueteur est disposé une second fosse de stockage **15** d'où les déchets sont évacués par un élévateur à godets **16**. Cet élévateur à godets **16** déverse les algues dans une trémie doseuse **17** dont le fond est formé par des volets ouvrants **18**, l'ouverture de ces volets étant réalisée lorsque la masse d'algues atteint une valeur déterminée, l'ouverture des volets se traduisant par l'arrêt de tous les moteurs disposés en amont.

En dessous de la trémié doseuse **17** est disposée une cuve **19** dans laquelle débouche et conduite **20** d'amenée d'eau douce. La cuve **19** contenant un volume déterminé d'eau douce, la trémie déverse dans celle-ci une quantité d'algues, dont le volume correspond sensiblement au volume d'eau.

Il est à noter que les algues déversées dans la cuve **19** contenant environ 15 g de sel pour 0,5 m³, la teneur en sel après mélange à l'eau douce est de 15 kg par m3 dans la cuve **19**. Des agitateurs à turbine **22** sont disposés dans la cuve **19**, afin de répartir le sel de façon homogène dans celle-ci. Ces agitateurs tournent à une vitesse de l'ordre de 800 tours par minute. En dessous de la cuve **19**, est disposé un déshydrateur mécanique **23** alimenté par gravité à partir de la cuve **19** par une conduite **24**, sur laquelle est montée une vanne **25**.

Ce déshydrateur mécanique **23** assure une séparation des algues et de l'eau, arrivant à extraire du mélange environ 30 % de matière sèche et 70 % d'eau, qui est évacuée par une conduite **26**. Les algues sont, pour leur part, dirigées par une conduite **27** dans une cuve **28** possèdant la même structure que celle **19** alimentée en eau douce par une conduite **29** et contenant des agitateurs **30**. Dans cette cuve **28**, les algues sont mélangées à de l'eau douce dans des proportions volumiques de 30 % d'algues et de 70 % d'eau douce. Dès lors, la teneur en sel dans cette cuve est de 4,5 kg par m3. En dessous de cette cuve est disposé un second déshydrateur **32** identique à celui **23** séparant les eaux résiduaires des algues marines humides, 0,7 m3 d'eau résiduaire contenant 3,150 kg de sel étant évacués par une conduite **33**, tandis que 0,3 m3 d'algues marines contenant 1,350 kg de sel sont évacués par une conduite **34** vers une trémie doseuse **35**. Cette trémie doseuse **35** est destinée à assurer le passage des algues dans des proportions déterminées dans une cuve **36** de constitution des boues, équipée d'agita teurs **37** et dans laquelle des boues résidues de station d'épuration sont amenées par une conduite **38**.

Ce mélange comprend 70 % de boues de station d'épuration et 30% d'algues humides, la teneur en sel du mélange étant donc de 1,350 kg par m3, valeur qui est tout à fait acceptable pour permettre une opération de fermentation méthanique. En effet, une trop forte concentration en sel est nuisible à une telle fermentation, d'une part, pour des raisons de pH et, d'autre part, du fait que les bactéries méthanigènes ne peuvent pas se développer en milieu salé.

Les boues ainsi constituées dans la cuve **36** peuvent être transférées directement dans la première cuve du groupe de méthanisation après réduction des particules en poudre par passage dans une pompe dilacératrice.

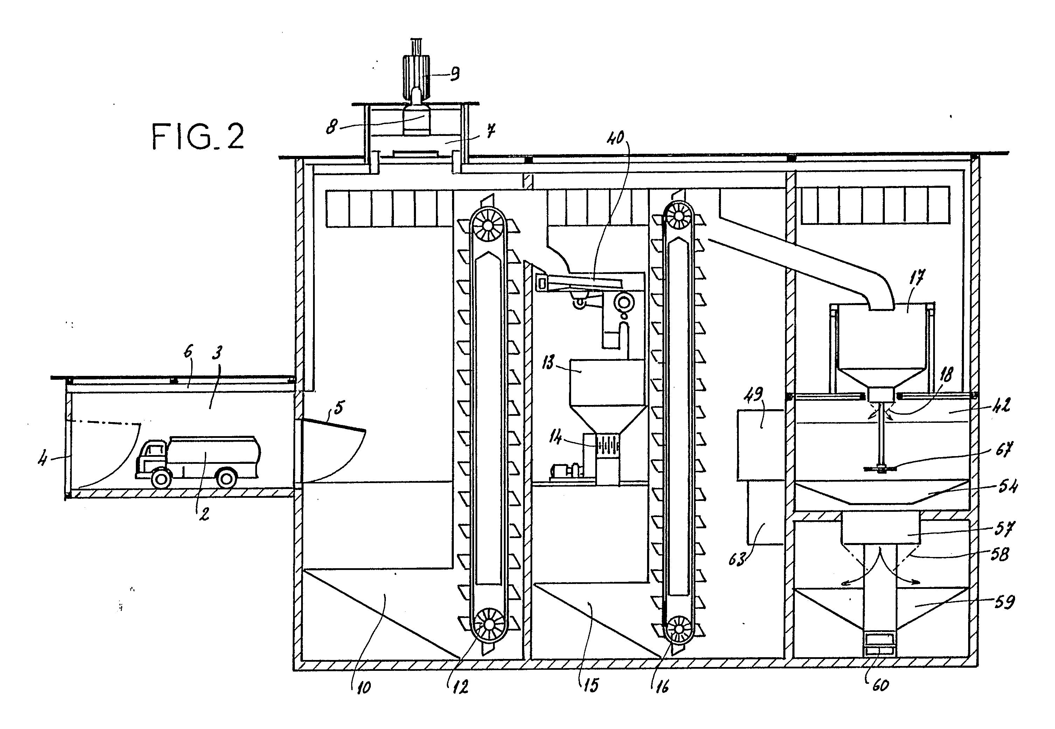

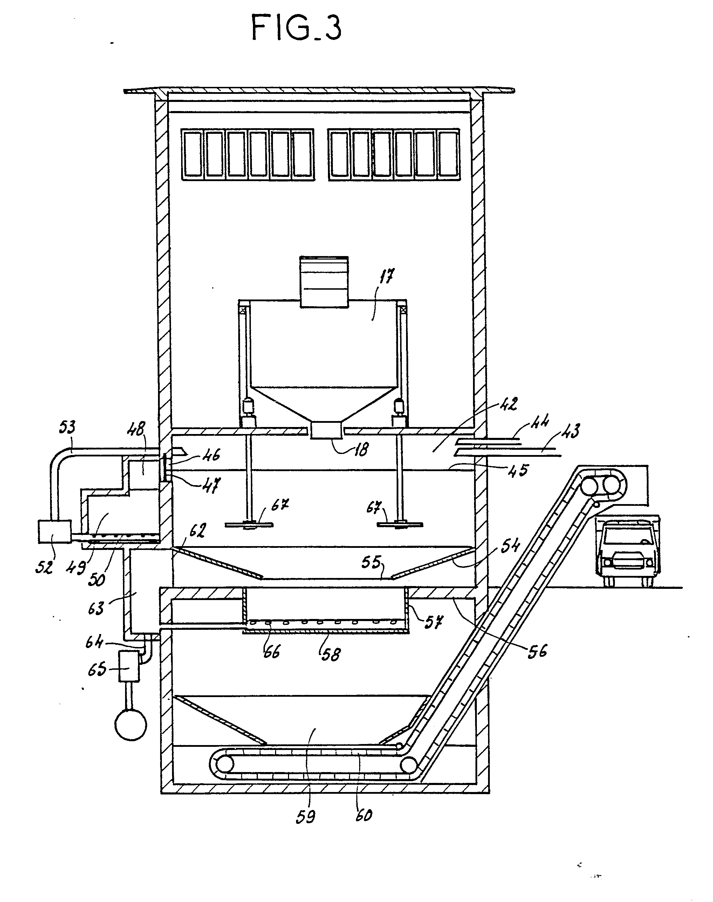

Les figures 2 et 3 représentent une installation dans laquelle les mêmes éléments sont désignés par les mêmes références que précédemment. Dans la partie aval de l'installation, celle-ci ne différencie de l'installation précédente que par la présence d'un tambour magnétique **40** disposé en amont du déchiqueteur. Il est cependant à noter que ce tambour magnétique présente une utilité dans le cas du traitement de déchets urbains, mais n'est pas nécessaire pour le traitement d'autres déchets organiques, tels que des déjections animales.

Dans la forme d'exécution représentée aux figures 2 et 3, la trémie doseuse **17** est située au-dessus d'une cuve **42** de forme générale parallèlépipèdique. Dans cette cuve débouchent une conduite **43** d'amenée de boues de station d'épuration, ainsi qu'une conduite d'amenée d'eau **44**. A proximité de son extrémité supérieure, et au niveau de la surface **45** du mélange contenue dans la cuve, est disposé un conduit latéral d'évacuation **46** obturé par une vanne guillotine **47** faisant communiquer le conduit **46** avec un tabouret **48** et une cuve de stockage **49**. Dans le fond de la cuve de stockage **49** est disposé un conduit crépiné **50** communiquant avec une pompe **52** destinée à ramener l'effluent liquide par un conduit **53** dans la cuve **42**. A proximité du fond de la cuve et au-dessus de celui-ci, est disposée une trémie métallique pleine **54** s'étendant jusqu'aux parois latérales de la cuve et dont la partie inférieure, située à une dizaine de centimères du fond **56** de la cuve, présente une ouverture centrale **55**. Dans le fond de la cuve débouche un caisson **57** qui est encastré dans celui-ci et dont l'ouverture est de surface supérieure à l'ouverture **55** de la trémie **54**. Ce caisson **57** est équipé d'un fond ouvrant **58**, situé au-dessous du fond **56** de la cuve et susceptible de le mettre en communication avec une fosse **59** équipée d'un transporteur à lamés **60**. Entre le fond de la trémie **54** et le fond **56** de la cuve, est ménagée latéralement une ouverture **62** faisant communiquer la cuve avec un tabouret **63**, en aval duquel est disposé un conduit d'évacuation **64** équipé d'une pompe dilacératrice **65**. Le fond du caisson **57** est équipé d'un conduit crépiné **66** débouchant dans le tabouret **63**. Enfin, et comme montré à la figure 3, la chambre **42** est équipée de deux turbines **67** d'axes verticaux.

Le fonctionnement de cette installation est le suivant :

Il est tout d'abord procédé à l'introduction, dans la cuve **42**, de boues de stations d'épuration par la conduite **43** et d'eau par la conduite **44**, avant introduction à partir de la trémie doseuse **17** des matières organiques contenues dans celle-ci. Les proportions respectives d'eau, de boues de stations d'épuration et de matières organiques sont telles que la concentration en matière sèche dans la cuve **42** soit de l'ordre de 50 g/l. L'introduction des matières organiques est de préférence réalisée en plusieurs pesées, sous agitation lente, pour réaliser une excellente dilution des matières organiques dans les boues.

Ensuite, la vitesse des agitateurs **67** est réduite afin de laisser reposer les boues, ce qui permet aux matières légères, telles que les matières synthétiques, de remonter à la surface, et aux matières lourdes, telles que verre et métaux non ferreux, de tomber dans le caisson **57**.

Les agitateurs **67** étant entraînés en rotation dans le même sens et à vitesse lente, il est procédé à l'ouverture de la vanne guillotine **47** permettant l'évacuation de la couche supérieure du mélange vers le tabouret **48** et la cuve de stockage **49**. La pompe **52** aspire les boues par l'intermédiaire du tuyau crépiné **50** et les recycle dans la cuve **42**, les matières synthétiques et autres matières légères demeurant dans la cuve de stockage.

Après fermeture de la vanne guillotine **47** de recyclage des boues contenues dans la cuve de stockage **49**, les agitateurs **67** sont actionnés à grande vitesse et en sens inverse, afin de permettre aux matières organiques et minérales de se désagréger sous l'action des turbulences ainsi obtenues.

Après ralentissement des agitateurs, il est procédé à l'évacuation des boues par le tabouret **63**, les boues traversant une pompe dilacératrice **65** qui réduit en poudre les particules qui n'ont pas été désagrégées dans la cuve. Les boues sont refoulées, par la pompe dilacératrice vers un deshydrateur mécanique. Ce refoulement est facilité par le fait que les boues ne sont qu'à une concentration de 50 g/l. Le deshydrateur mécanique est situé sur la première cuve du Groupe de fermentation. Ce dernier les porte à une concentration voisine de 180 g/l. Après leur épaississement les boues tombent, par gravité, dans la première cuve de méthanisation.

Il est à noter qu'en fin de vidange de la cuve **42**, les boues contenues dans le caisson **57** sont évacuées de celui-ci par le conduit crépiné **66**, après quoi les matières lourdes, telles que verre et métaux non ferreux, peuvent être évacuées vers la fosse **59** par simple ouverture du fond **58** du caisson **57**.

Cet agencement permet l'essorage des matières lourdes avant leur évacuation, celles-ci étant reprises dans la fosse de stockage **59** par un transporteur à bande, à lames d'acier **60**, qui permet de les charger sur un camion en vue de leur transport vers un centre de recyclage des verres, la séparation du verre et des métaux non ferreux y étant réalisée par simple criblage.

Il est intéressant de noter que ce procédé et le dispositif pour sa mise en oeuvre assurent de façon simple et économique, d'une part, la récupération des matières légères et, d'autre part, la récupération des matières lourdes qui peuvent, éventuellement, être recyclées, tout en assurant la formation de boues organiques d'une excellente qualité pour la méthanisation.

**Revendications**

1. - Procédé de traitement hydromécanique de déchets organiques pour la préparation des boues fermentescibles, caractérisé en ce qu'il consiste à réaliser éventuellement, de façon connue en soi, à l'aide d'un tambour magnétique, la séparation des particules de métaux ferreux pouvant être contenues à l'intérieur de la matière traitée, à réaliser le déchiquetage des matières organiques et des matières inertes, à amener celles-ci dans une cuve à l'intérieur de laquelle elles subissent une agitation en milieu aqueux, à séparer des boues les éventuelles matières flottantes et lourdes qu'elles peuvent contenir, et à ajouter à ces boues des boues en provenance de station d'épuration.

2. - Procédé selon la revendication 1, caractérisé en ce que, dans le cas où les déchets sont constitués par des algues marines, il consiste à déchiqueter les algues, puis à mélanger les algues humides mais essorées avec de l'eau douce, dans des proportions volumiques sensiblement égales pour les algues et l'eau douce, à agiter fortement le mélange, à réaliser une déshydratation mécanique de celui-ci, à mélanger les algues ainsi obtenues avec un volume d'eau douce égal au volume d'eau précédemment évacué, à agiter fortement le mélange, à en réaliser une nouvelle déshydratation mécanique puis à remplacer la dernière fraction d'eau évacuée par déshydratation, par des boues de rejet d'une station d'épuration.

3. - Procédé selon la revendication 2, caractérisé en ce qu'il consiste à mélanger environ 30 % en volume d'algues avec 70 % de boues de station d'épuration.

4. - Procédé selon la revendication 1, caractérisé en ce que, dans la mesure où les matières organiques à traiter sont constituées par des déchets urbains, agricoles, forestiers, ou des déjections animales, il consiste à introduire dans une cuve les matières organiques ayant préalablement subi, si besoin est, une séparation des particules métalliques, et une opération de déchiquetage, les matières organiques étant mélangées dans la cuve à des boues provenant d'une station d'épuration et à de l'eau pour obtenir une concentration en matières sèches de l'ordre de 50 g/l, ce mélange étant réalisé sous agitation énergique, à procéder ensuite à une agitation lente afin de permettre aux matières légères de remonter en surface et aux matières lourdes de tomber au fond de la cuve, à évacuer la couche supérieure du mélange contenu dans la cuve pour récupérer les matières légères et recycler l'effluent liquide, à agiter fortement les boues afin de permettre aux particules de matières organiques et minérales de se désagréger puis, après avoir réduit la vitesse d'agitation, à réaliser l'évacuation des boues au niveau du fond de la cuve, dans lequel est ménagé un caisson de récupération des matières lourdes, les boues contenues dans ce caisson étant évacuées avant de vider celui-ci des matières lourdes qu'il contient.

5. - Dispositif pour la mise en oeuvre du procédé selon l'une quelconque des revendications 1 à 4, caractérisé en ce qu'il comprend une fosse de réception des déchets, un transporteur les amenant à un déchiqueteur, un second transporteur les amenant dans une trémie de dosage disposée au-dessus d'au moins une cuve de préparation des boues dans laquelle débouche un conduit d'amenée de boues résidues de station d'épuration.

6. - Dispositif selon la revendication 5 pour la mise en oeuvre du procédé selon la revendication 2, caractérisé en ce qu'il comprend en dessous de la trémie de dosage et de haut en bas

- une cuve (19) équipée d'un conduit (20) d'amenée d'eau douce et d'agitateurs (22), destinée à réaliser un mélange d'algues et d'eau douce en proportions sensiblement égales, et dont le fond communique avec

-un deshydrateur (23) séparant sensiblement 70 % d'eau et 30 % d'algues qui sont transférées dans

- une seconde cuve (28) équipée d'un conduit (29) d'amenée d'eau douce et d'agitateurs (30), destinée à réaliser un mélange d'algues et d'eau douce, cette dernière étant présente sous un volume sensiblement égal à celui précédemment évacué, et dont le fond communique avec

- un second déshydrateur (32) séparant sensiblement 70 % d'eau et 30 % d'algues qui sont transférées dans une trémie doseuse (35) dont le fond alimente

- une cuve (36) de constitution des boues dans laquelle débouche un conduit (38) d'amenée de boues de station d'épuration.

7. - Dispositif selon la revendication 5, pour la mise en oeuvre du procédé selon la revendication 4, caractérisé en ce qu'il comprend en dessous de la trémie de dosage (17), une cuve (42) de préparation des boues dans laquelle débouchent une conduite (43) d'amenée de boues de station d'épuration et une conduite (44) d'amenée d'eau, cette cuve communiquant latéralement par une vanne guillotine (47) avec un tabouret (48) débouchant dans une cuve de stockage (49) à partir de laquelle les boues peuvent être recyclées dans la cuve principale (42) par un conduit crépiné (50) une pompe (52) et un conduit (53), la cuve de préparation étant équipée d'une trémie (54) s'étendant jusqu'aux parois latérales de la cuve et comprenant une ouverture centrale (55) débouchant peu au-dessus du fond (56) de la cuve, celle-ci communiquant latéralement entre son fond (56) et la trémie (54) avec un tabouret (63) hors duquel les boues sont évacuées par une pompe dilacératrice (65), un caisson (57) dont l'ouverture est de surface inférieure à celle de la trémie (54) et disposée sous celle-ci, étant encastré dans le fond (56) de la cuve (42), le fond du caisson étant équipé d'un conduit crépiné (66) débouchant dans le tabouret (63) d'évacuation des boues, la cuve (42) comportant enfin des agitateurs (67) d'axes verticaux.

8. - Dispositif selon la revendication 7, caractérisé en ce que le caisson (57) possède un fond ouvrant (58) et est disposé au-dessus d'une fosse (59) de récupération des matériaux lourds.

FIG.1

FIG. 2

0291425

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 583 309 (A. JULLIEN et al.) * Page 1, ligne 1 - page 4, ligne 4; page 5, ligne 30 - page 8, ligne 11; figures 1-4 * | 1,5 | B 03 B    9/06 C 12 M    1/00 |
| A | --- | 4,7,8 | |
| Y | US-A-3 711 392 (J.B. METZGER) * Colonne 2, lignes 33-67; figure 1 * | 1,5 | |
| A | FR-A-2 516 542 (I.F.P. et al.) * Page 9, lignes 9-30; page 13, lignes 1-25 * | 2,3 | |
| A | US-A-4 329 428 (S. GHOSH et al.) * Colonne 2, lignes 8-50 * | 2 | |
| A | EP-A-0 167 984 (C.G.E) * Page 1, lignes 1-15; page 3, ligne 32 - page 4, ligne 12; figure * | 2 | |
| A | FR-A-2 218 946 (RUTIR) * Page 7, ligne 32 - page 8, ligne 16; figure 13 * | 4 | **DOMAINES TECHNIQUES RECHERCHES (Int. Cl.4)** B 03 B C 12 P C 02 F C 12 M |

Le présent rapport a été établi pour toutes les revendications

| Lieu de la recherche | Date d'achèvement de la recherche | Examinateur |
|---|---|---|
| LA HAYE | 04-05-1988 | LAVAL J.C.A |